# FASCICULE DE BREVET EUROPEEN

(11) **EP 0 872 650 B1**
(45) Date de publication et mention de la délivrance du brevet: **31.07.2002**
(21) Numéro de dépôt: 98410042.0
(22) Date de dépôt: 16.04.1998
(51) Int. Cl.: F16B 37/12, B29C 65/44

(54) **Elément d'assemblage bimétallique pour des pièces plastiques**
Bimetallisches Befestigungselement für Kunststoffteile
Bimetallic fastening element for plastic parts

(30) Priorité: 17.04.1997 FR 9704981
(43) Date de publication de la demande: 21.10.1998
(73) Titulaire: Bollhoff Otalu S.A., 73490 La Ravoire (FR)
(72) Inventeur: Fromont, Marc, 73230 Saint Alban-Leysse (FR)
(74) Mandataire: Hecké, Gérard

(56) Documents cités:
- DE-A- 3 232 715
- FR-A- 2 732 417

## Description

L'invention est relative à un élément d'assemblage pour des pièces en matière plastique, comprenant un premier organe d'insertion tubulaire entourant coaxialement un deuxième organe de fixation, ledit premier organe d'insertion étant chauffé et introduit dans un logement conjugué d'une pièce plastique pour provoquer une fusion de la matière plastique, suivie après refroidissement d'une immobilisation de l'élément d'assemblage dans la pièce plastique.

Les documents FR-A2732417 et FR-A-2250040 concernent des inserts métalliques introduits après chauffage dans un corps en matière plastique. La fusion de la matière plastique assure une cohésion et une bonne immobilisation de l'insert dans le plastique. Il est classique de faire usage soit d'une méthode thermique consistant à transmettre la chaleur de l'insert au plastique par un effet de conduction, soit d'une méthode à ultra-sons produisant un échauffement par un effet de micro-frottements au niveau de l'interface insert-plastique. Le temps de préchauffage pour la pose thermique peut être réduit en utilisant des inserts en cuivre ou en laiton. Mais la résistance mécanique d'inserts en cuivre est limitée, et est incompatible avec des assemblages dépassant un certain poids. Il devient alors nécessaire de faire appel à des inserts en acier, mais au détriment des temps d'insertion, et des coûts de montage.

L'objet de l'invention consiste à réaliser un élément d'assemblage pour pièces plastiques permettant de réduire les temps d'insertion, tout en garantissant une résistance mécanique optimum.

L'élément d'assemblage selon l'invention est caractérisé en ce que l'élément d'assemblage est bimétallique, le premier organe d'insertion étant réalisé en un matériau métallique ayant une bonne conductivité thermique, tandis que le matériau du deuxième organe de fixation confère à l'élément d'assemblage une résistance mécanique élevée.

Le matériau du premier organe d'insertion est à base de cuivre ou de laiton. Le matériau du deuxième organe de fixation est à base d'acier ou de fer.

La constitution bimétallique de l'élément d'assemblage permet d'allier la conductibilité thermique et la résistance mécanique. Le préchauffage de l'organe d'insertion en cuivre pour la pose thermique est nettement inférieur à celui d'un insert à goujon monobloc en acier. La fabrication de ce dernier nécessite d'autre part une opération de décolletage, alors que l'élément d'assemblage bimétallique en deux parties selon l'invention peut être réalisé au moyen d'une opération moins onéreuse, à vis frappée et roulée en acier.

Selon le mode de réalisation préférentiel, le deuxième organe de fixation comprend un goujon ayant une tige filetée saillante et une tête de retenue emmanchée à l'intérieur de la surface interne tubulaire du premier organe d'insertion. Le premier organe d'insertion comprend un épaulement servant de butée à la tête de retenue du goujon.

Selon une caractéristique de l'invention, le premier organe d'insertion comporte une collerette d'incrustation, et une surface d'ancrage moletée de forme tronconique adaptée à la forme du logement et de la pièce plastique, la petite base de ladite surface d'ancrage étant conformée selon un anneau d'arrêt destiné à bloquer en translation le deuxième organe de fixation à l'intérieur du premier organe d'insertion.

D'autres avantages et caractéristiques ressortiront plus clairement de la description qui va suivre d'un mode de réalisation de l'invention, donné à titre d'exemple non limitatif, et représenté aux dessins annexés, dans lesquels :
- la figure 1 est une vue schématique en coupe de l'élément d'assemblage bimétallique selon l'invention ;
- la figure 2 montre l'élément d'assemblage de la figure 1 inséré dans une pièce en plastique ;
- la figure 3 représente l'élément d'assemblage permettant la fixation d'un panneau à la pièce en plastique.

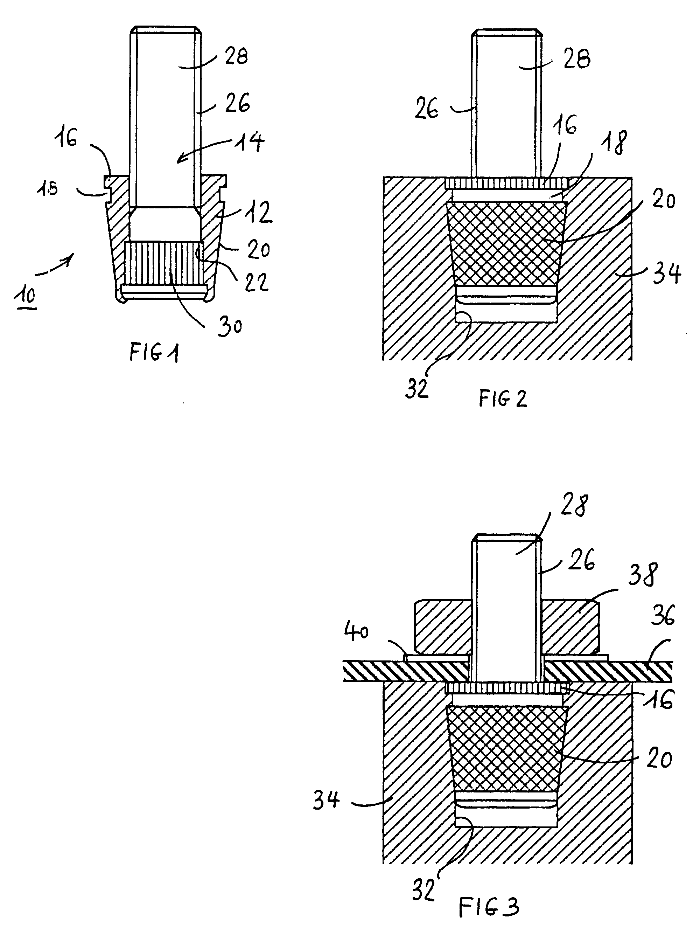

Sur la figure 1, un élément d'assemblage 10 bimétallique pour pièces plastiques est composé d'un premier organe d'insertion 12 de forme creuse, entourant coaxialement un deuxième organe de fixation 14 central.

Le premier organe d'insertion 12 comporte une collerette 16 de maintien reliée par une gorge 18 annulaire à une surface d'ancrage 20 de forme tronconique. L'ensemble est destiné à être introduit dans un logement d'une pièce en matière plastique de manière à provoquer la fusion partielle de la matière plastique lors de son enfoncement dans le logement, et suite à un échauffement préalable du premier organe d'insertion 12. A cet effet, le premier organe d'insertion 12 est réalisé en un matériau métallique bon conducteur de la chaleur, par exemple en cuivre ou laiton, autorisant un chauffage rapide avant l'insertion dans le logement de la pièce plastique.

La surface d'ancrage 20 tronconique du premier organe d'insertion 12 est moletée, la grande base étant située du côté de la gorge 18. L'épaisseur de la gorge 18 annulaire est faible par rapport à la longueur axiale de la surface d'ancrage 20. Le diamètre interne de la gorge 18 est inférieur à celui de la grande base circulaire de la surface d'ancrage 20.

La surface interne tubulaire du premier organe d'insertion 12 est dotée d'un épaulement 22 servant d'organe de butée pour le deuxième organe de fixation 14. La petite base de la surface d'ancrage 20 est conformée selon un anneau d'arrêt 24 destiné à bloquer en translation le deuxième organe de fixation 14 à l'intérieur du premier organe d'insertion 12.

Le deuxième organe de fixation 14 comprend un goujon 26 ayant une tige filetée 28 faisant saillie du premier organe d'insertion 12 du côté de la collerette de maintien 16, et une tête de retenue 30 ayant un diamètre légèrement supérieur à celui de la tige 28, et une forme conjuguée à celle de l'épaulement 22. La tête de retenue 30 n'est pas filetée, mais sa surface latérale est pourvue de stries permettant d'assurer un blocage en rotation du goujon 26 à l'intérieur de l'organe d'insertion 12.

La tige filetée 28 est introduite axialement dans l'organe d'insertion 12 du côté de l'anneau d'arrêt 24 jusqu'à la venue en butée de la tête de retenue 30 contre l'épaulement 22. La tête 30 est totalement insérée à l'intérieur de l'organe d'insertion 12, et l'anneau d'arrêt 24 peut être déformé par écrasement pour constituer un verrouillage positif empêchant tout échappement du goujon 26. Cette opération d'emmanchement de l'organe de fixation 14 dans l'organe d'insertion 12 est effectuée en automatique.

Le goujon 26 peut avoir un filetage M6 standard, réalisé en acier, conférant à l'élément d'assemblage 10 une résistance mécanique élevée.

En référence à la figure 2, l'élément d'assemblage 10 de la figure 1 est mis en place dans un logement 32 ménagé dans le corps d'une pièce plastique 34. Le logement 32 borgne possède une forme conjuguée à celle du premier organe d'insertion 12, la profondeur du logement 32 étant légèrement supérieure à la longueur axiale de l'organe d'insertion 12. L'immobilisation de l'élément d'assemblage 10 dans la pièce plastique 34 résulte du chauffage préalable du premier organe d'insertion 12 jusqu'à une température prédeterminée, provoquant la fusion du plastique lors de l'enfoncement en direction du fond du logement 32 suite à une action de poussée d'un outillage adapté.

Le chauffage du premier organe d'insertion 12 est très rapide grâce à la bonne conductibilité thermique du matériau à base de cuivre. Cette opération est faite d'une manière classique, soit par une méthode thermique, soit par une méthode à ultra-sons. Dans le cas de la méthode thermique , le premier organe d'insertion 12 est chauffé par sa surface externe lors de la course d'enfoncement dans le logement 32 de la pièce plastique 34. La chaleur du premier organe d'insertion 12 est transmise au plastique par conduction, et provoque sa fusion, laquelle se produit progressivement dans le logement 32 en fonction de la position de l'organe d'insertion 12.

Dans le deuxième cas de la méthode à ultra-sons, une machine à ultra-sons est plaquée contre la surface externe de l'élément d'assemblage 10, de manière à créer un échauffement par frottement mécanique au niveau de l'interface avec la pièce plastique 34.

La présence de la gorge 18 annulaire permet un effet de refoulement du surplus de matériau de plastique fondu sous l'action d'incrustation de la collerette 16, de manière à renforcer la tenue mécanique de l'assemblage après refroidissement du premier organe d'incrustation 12, et de la solidification de la matière plastique. La section extérieure de la collerette 16 peut être circulaire ou polygonale. L'élément d'assemblage 10 en position montée dans la pièce plastique 34 présente l'organe d'insertion 12 complètement noyé dans le logement 32, seule dépasse verticalement la tige filetée 28 du goujon 26.

En référence à la figure 3, la pièce plastique 34 équipée de l'élément d'assemblage 10 peut être assemblée à un panneau 36 au moyen d'un écrou 38 vissé sur la tige filetée 28 du goujon 26 en acier. Il suffit de percer dans le panneau 36 un orifice de diamètre légèrement supérieur à celui du goujon 26, et de serrer l'écrou 38 avec interposition d'une rondelle 40. Un tel assemblage à insert bimétallique pour pièces plastiques est facile à mettre en oeuvre, et permet d'obtenir une résistance mécanique élevée.

## Revendications

1. Elément d'assemblage (10) pour des pièces en matière plastique, comprenant un premier organe d'insertion (12) tubulaire entourant coaxialement un deuxième organe de fixation (14), ledit premier organe d'insertion étant chauffé et introduit dans un logement (32) conjugué d'une pièce plastique (34) pour provoquer une fusion de la matière plastique, suivie après refroidissement d'une immobilisation de l'élément d'assemblage dans la pièce plastique (34),
**caractérisé en ce que** l'élément d'assemblage (10) étant bimétallique, le premier organe d'insertion (12) étant réalisé en un matériau métallique ayant une bonne conductivité thermique, tandis que le matériau du deuxième organe de fixation (14) confère à l'élément d'assemblage (10) une résistance mécanique élevée.

2. Elément d'assemblage (10) selon la revendication 1, **caractérisé en ce que** le matériau du premier organe d'insertion (12) est à base de cuivre ou de laiton.

3. Elément d'assemblage selon la revendication 2, **caractérisé en ce que** le matériau du deuxième organe de fixation (14) est à base d'acier ou de fer.

4. Elément d'assemblage selon la revendication 3, **caractérisé en ce que** le deuxième organe de fixation (14) comprend un goujon (26) ayant une tige filetée (28) saillante et une tête de retenue (30) emmanchée à l'intérieur de la surface interne tubulaire du premier organe d'insertion (12).

5. Elément d'assemblage selon la revendication 4, **caractérisé en ce que** le premier organe d'insertion (12) comprend un épaulement (22) servant de butée à la tête de retenue (30) du goujon (26).

6. Elément d'assemblage selon la revendication 5, **caractérisé en ce que** la périphérie de la tête de retenue (30) est dotée de stries pour amener un blocage en rotation du goujon (26) à l'intérieur de l'organe d'insertion (12).

7. Elément d'assemblage selon l'une des revendications 1 à 6, **caractérisé en ce que** le premier organe d'insertion (12) comporte une collerette d'incrustation (16), et une surface d'ancrage (20) moletée de forme tronconique adaptée à la forme du logement (32) et de la pièce plastique (34), la petite base de ladite surface d'ancrage étant conformée selon un anneau d'arrêt (24) destiné à bloquer en translation le deuxième organe de fixation (14) à l'intérieur du premier organe d'insertion (12).

## Patentansprüche

1. Verbindungselement (10) für Kunststoffteile, das eine erste röhrenförmige Einführungseinrichtung (12) umfasst, die eine zweite Befestigungseinrichtung (14) koaxial umgibt, welche erste Einführungseinrichtung erhitzt und in eine passende Aufnahme (32) eines Kunststoffteils (34) eingeführt wird, um ein Schmelzen des Kunststoffs zu bewirken, das nach dem Abkühlen eine Blockierung des Verbindungselements in dem Kunststoffteil (34) nach sich zieht, wobei das Verbindungselement (10) bimetallisch ist und die erste Einführungseinrichtung (12) aus einem metallischen Material mit guter Wärmeleitfähigkeit besteht, während das Material der zweiten Befestigungseinrichtung (14) dem Verbindungselement (10) eine hohe mechanische Festigkeit gibt.

2. Verbindungselement (10) nach Anspruch 1, **dadurch gekennzeichnet, dass** das Material der ersten Einführungseinrichtung (12) eines auf Kupfer- oder Messingbasis ist.

3. Verbindungselement nach Anspruch 2, **dadurch gekennzeichnet, dass** das Material der zweiten Befestigungseinrichtung (14) eines auf Stahl- oder Eisenbasis ist.

4. Verbindungselement nach Anspruch 3, **dadurch gekennzeichnet, dass** die zweite Befestigungseinrichtung (14) einen Bolzen (26) mit einem gewindeten, herausstehenden Schaft (28) sowie einen Rückhaltekopf (30) umfasst, der innerhalb der röhrenförmigen Innenfläche der ersten Einführungseinrichtung (12) eingesteckt ist.

5. Verbindungselement nach Anspruch 4, **dadurch gekennzeichnet, dass** die erste Einführungseinrichtung (12) einen Vorsprung (22) umfasst, die als Anschlag für den Rückhaltekopf (30) des Bolzens (26) dient.

6. Verbindungselement nach Anspruch 5, **dadurch gekennzeichnet, dass** der Rückhaltekopf (30) an seinem Umfang mit Riefen versehen ist, um eine Drehblockierung des Bolzens (26) in der Einführungseinrichtung (12) herbeizuführen.

7. Verbindungselement nach einem der Ansprüche 1 bis 6, **dadurch gekennzeichnet, dass** die erste Einführungseinrichtung (12) einen Sinterkragen (16) und eine gerändelte Verankerungsfläche (20) mit konischer Form umfasst, die zur Form der Aufnahme (32) und des Kunststoffteils (34) passt, wobei die kleine Grundfläche der Verankerungsfläche in Form eines Arretierungsringes (24) vorgesehen ist, der dazu bestimmt ist, die zweite Befestigungseinrichtung (14) innerhalb der ersten Einführungseinrichtung (12) in ihrer Parallelbewegung zu blockieren.

## Claims

1. An assembly element (10) for parts made of plastic material comprising a first tubular insertion means (12) coaxially surrounding a second fastening means (14), said first insertion means being heated and inserted in a conjugate housing (32) of a plastic part (34) to cause melting of the plastic material followed after cooling by immobilisation of the assembly element in the plastic part (34),
the assembly element (10) being bimetallic, the first insertion means (12) being made of a metallic material having a good thermal conductivity whereas the material of the second fastening means (14) gives the assembly element (10) a high mechanical strength.

2. The assembly element (10) according to claim 1, **characterized in that** the material of the first insertion means (12) is copper- or brass-based.

3. The assembly element according to claim 2, **characterized in that** the material of the second fastening means (14) is steel- or iron-based.

4. The assembly element according to claim 3, **characterized in that** the second fastening means (14) comprise a cotter-pin (26) having a salient threaded shank (28) and a securing head (30) fitted inside the tubular internal surface of the first insertion means (12).

5. The assembly element according to claim 4, **characterized in that** the first insertion means (12) comprise a shoulder (22) acting as a stop for the securing head (30) of the cotter-pin (26).

6. The assembly element according to claim 5, **characterized in that** the periphery of the securing head (30) is provided with ribs to perform blocking of the cotter-pin (26) in rotation inside the insertion means (12).

7. The assembly element according to one of the claims 1 to 6, **characterized in that** the first insertion means (12) comprise an embedding collar (16) and a tapered knurled securing surface (20) designed to fit the shape of the housing (32) and of the plastic part (34), the small base of said securing surface being shaped as a stop ring (24) designed to block the second fastening means (14) in translation inside the first insertion means (12).
